# EUROPÄISCHE PATENTANMELDUNG

(11) **EP 2 372 087 A1**
(43) Veröffentlichungstag der Anmeldung: **05.10.2011**
(21) Anmeldenummer: 10003290.3
(22) Anmeldetag: 26.03.2010
(51) Int. Cl.: F01D 5/14, F01D 5/18, F01D 9/04, F23R 3/00, B23P 15/04

(54) **Komponente mit einer einem Heissgas einer Gasturbine aussetzbaren Aussenwand und Verfahren zum Herstellen einer derartigen Komponente**

(71) Anmelder: Siemens Aktiengesellschaft, 80333 München (DE)
(72) Erfinder: Ahmad, Fathi, 41564 Kaarst (DE); Paul, Uwe, Dr., 40882 Ratingen (DE)

(57) **Zusammenfassung**

Die Erfindung betrifft eine Komponente (14) mit einer einem Heißgas (15, 62) einer Gasturbine aussetzbaren Außenwand (25, 60) umfassend einen Grundkörper (32, 52), einen zur Kühlung der Außenwand (25, 60) vorgesehenen Kanal (26, 28, 30, 54) und einen im Kanal (26, 28, 30, 54) angeordneten Einsatz (34, 56) sowie ein Verfahren zu dessen Herstellung. Dabei ist vorgesehen, dass der Einsatz (34, 56) und der Grundkörper (32, 52) separat voneinander hergestellt werden, wobei der Einsatz (34, 56) eine äußere Kontur aufweist, die der inneren Kontur des Kanals (26, 28, 30, 54) im Wesentlichen entspricht. Um dabei eine besonders gute Anbindung des porösen Einsatzes (34, 56) mit der Kanalwand zu erreichen, wird vorgeschlagen, dass die poröse Struktur eine metallische nicht poröse Begrenzungswand (42, 44, 58) aufweist. Die metallische Begrenzungswand (42, 44, 58) wird dabei gleichzeitig mit der porösen Struktur hergestellt und ist kaltseitig flächig der Außenwand (25) verbunden. Zur Montage der Komponente (14) werden der Grundkörper (32, 52) erhitzt und/oder der Einsatz (34, 56) abgekühlt.

## Beschreibung

Komponente mit einer einem Heißgas einer Gasturbine aussetzbaren Außenwand und Verfahren zum Herstellen einer derartigen Komponente

Die Erfindung betrifft eine Komponente mit einer einem Heißgas einer Gasturbine aussetzbaren Außenwand, umfassend einen Grundkörper, einen zur Kühlung der Außenwand vorgesehenen Kanal und einen im Kanal angeordneten Einsatz sowie ein Verfahren zum Herstellen einer derartigen Komponente.

Ein gattungsgemäßes Bauteil ist beispielsweise aus der WO 03/006883 A1 bekannt. Das daraus bekannte Bauteil ist als Führungsringsegment einer Gasturbine ausgebildet, deren heißgasbeaufschlagbare Außenwand rückseitig prallgekühlt ist. Im Zwischenraum zwischen Prallkühlblech und der thermisch hoch belasteten Außenwand ist ein poröses, mit der Außenwand verbundenes Material vorgesehen, mittels dem die von dem Kühlmittel überstreichbare Oberfläche vergrößert ist, um eine gesteigerte Kühlleistung zu erreichen. Dabei ist vorgesehen, dass die poröse Struktur mit dem Führungsringsegment gemeinsam in einem Gussverfahren hergestellt wird, um eine bestmögliche Wärmeleitung zwischen Außenwand und poröser Struktur zu erreichen.

Durch die Verwendung der porösen Strukturen ist es möglich, die Kühlung der heißgasbeaufschlagten gekühlten Komponenten zu verbessern oder einen geringeren Kühlluftverbrauch zu erzielen, verglichen mit einer gekühlten Komponente, die keine poröse Struktur besitzt.

Jedoch besteht ein Problem darin, die porösen, mit einer hohen Wärmeleitfähigkeit versehenen Strukturen dauerhaft und zuverlässig an die Innenwand der zu kühlenden Wand zu befestigen und dabei gleichzeitig Relativbewegungen der zu kühlenden, jedoch heißen Außenwand gegenüber der rückseitigen kühleren Strukturen zu ermöglichen, um die mechanische Belastung in der Komponente insgesamt so gering wie möglich zu halten, da ansonsten darin Beschädigungen auftreten können. Als Beschädigungen können Risse in der porösen Struktur auftreten. Insbesondere die Beschädigungen der porösen Struktur oder deren Anbindung an die im Betrieb heiße Außenwand führen dann aber zur Verminderung der Wärmeleitfähigkeit, was sich schließlich durch lokale Überhitzungen negativ auf die Lebensdauer des Bauteils auswirkt.

Aufgabe der Erfindung ist daher die Bereitstellung eines Verfahrens zum Herstellen einer einem Heißgas einer Gasturbine aussetzbaren Komponente, umfassend einen Grundkörper mit einem Kanal zur Führung eines Kühlmittels und einen darin sitzenden Einsatz sowie die Bereitstellung einer derartigen Komponente, welche eine besonders hohe Lebensdauer aufweist und bei der die mechanisch-thermische Belastung weiter minimiert ist.

Die auf das Verfahren gerichtete Aufgabe wird mit einem Verfahren gemäß den Merkmalen des Anspruchs 1 gelöst. Die auf die Komponente gerichtete Aufgabe wird mit einer nach den Merkmalen des Anspruchs 7 ausgestalteten Komponente gelöst.

Die Erfindung geht dabei von der Erkenntnis aus, dass das ursprüngliche Verfahren, gemäß welchem sowohl die Komponente selber als auch die poröse Struktur gleichzeitig in einem gemeinsamen Herstellungsverfahren, namentlich in einem Gießprozess, hergestellt wird, nachteilig ist. Mit der Erfindung wird nun vorgeschlagen, die Komponente nicht mehr monolithisch herzustellen, sondern in mehreren Herstellungsschritten. Die betreffende Komponente, sei es eine Turbinenschaufel, sei es ein Führungsringsegment oder sei es ein Wandelement einer Gasturbinenbrennkammer, umfasst demgemäß einen Grundkörper, in dem oder an dem ein separat gefertigter Einsatz ein- bzw. angebracht und befestigt wird. Der Einsatz befindet sich dabei in einem Kanal des Grundkörpers oder in einem Kanal, welcher an den Grundkörper angrenzt. Der Kanal ist in der einsatzbereiten Komponente zur Führung eines Kühlmittels ausgebildet und derartig angeordnet, dass das durch ihn strömbare Kühlmittel eine einem Heißgas einer Gasturbine aussetzbare Außenwand der Komponente wirksam kühlt. Um nun eine innige Verbindung zur widerstandsarmen Wärmeleitung zwischen Einsatz und Außenwand herzustellen, wird vorgeschlagen, den Grundkörper und Einsatz separat voneinander zu fertigen und nachträglich miteinander wirksam zu verbinden. Vor dem Einsetzen des Einsatzes in den Kanal des Grundkörpers wird letztgenannter aufgeheizt und/oder der Einsatz abgekühlt. Durch das Schrumpfverhalten des Einsatzes bzw. durch das Dehnverhalten des Grundkörpers kann aufgrund der thermischen Behandlung der Einsatz vergleichsweise einfach in den Kanal eingesetzt werden. Dabei ist vorgesehen, dass bei Raumtemperatur die Querschnittskontur des Kühlkanals dabei im Wesentlichen der äußeren Kontur des Einsatzes entspricht. Hierdurch ist es möglich, dass nach dem Abschluss einer thermischen Homogenisierung, wodurch beide Elemente - Grundkörper und Einsatz - sich auf Raumtemperatur abkühlen, eine flächige spielfreie Verbindung in Form eines Kontakts zueinander haben, welche besonders gut wärmeleitend ist.

Gemäß einer ersten vorteilhaften Ausgestaltung des Verfahrens zum Herstellen der Komponente ist vorgesehen, dass vor dem Einsetzen des Einsatzes in den Kanal an denjenigen Oberflächen des Einsatzes, welche nach dem Einsetzen in den Kanal an derjenigen Seite des Kanals zum Anliegen gelangt, welcher der heißgasbeaufschlagten Außenwand gegenüberliegt, zumindest bereichsweise eine metallische Folie angelegt oder Beschichtung aufgebracht wird. Die dünne metallische Folie - beispielsweise eine Nickelfolie - oder eine Nickelschicht kann zum Ausgleich etwaiger herstellungsbedingter Rauhigkeiten und/oder Ungenauigkeiten hinsichtlich der Größe und/oder Kontur von Kanal und Einsatz genutzt werden. Sozusagen kann die Folie einerseits als Ausgleichmasse dienen. Andererseits dient sie auch zur Herabsetzung des Wärme-Übergangswiderstands zwischen Außenwand und Einsatz.

Gemäß einem weiteren vorteilhaften Verfahrensschritt kann nach dem Einsetzen des Einsatzes in den Kanal die Komponente eine weitere thermische Behandlung erfahren. Mit Hilfe dieser thermischen Behandlung kann eine stoffschlüssige Verbindung zwischen dem Einsatz und der Wand des Kanals hergestellt werden - ähnlich wie beim Löten oder Schweißen. Im Fall der Verwendung der metallischen Folie zwischen Einsatz und Kühlkanalwand wirkt diese als Aktivator während der thermischen Behandlung. Dadurch wird eine zusätzliche metallische Bindung zwischen der Außenwand und des Einsatzes geschaffen, was bei der bestimmungsgemäßen Verwendung der Komponente zu einer besonders guten Wärmeübertragung führt.

Eine besonders verlustarme Wärmeleitung aus der zu kühlenden Außenwand der Komponente in eine poröse Struktur des Einsatzes gelingt, wenn der Einsatz an seiner äußeren Kontur eine flächige nicht poröse Begrenzungswand aufweist, die zumindest teilweise flächig, vorzugweise jedoch vollflächig mit derjenigen Seite des Kanals des Kühlkanals in Kontakt steht bzw. gebracht wird, welche der heißgasbeaufschlagten Fläche der Außenwand gegenüber liegt. Durch die großflächige Verbindung - verglichen mit einem rein porösen Einsatz, dessen poröse Strukturen an der Kanalwand unmittelbar anliegen - kann der Eintrag von Wärmeenergie in die poröse Struktur wesentlich effizienter erfolgen, wodurch die Kühlleistung des durch die poröse Struktur strömenden Kühlmittels während des Betriebs der Gasturbine weiter gesteigert ist.

Gemäß einer weiteren vorteilhaften Ausgestaltung ist vorgesehen, dass der Einsatz zwei- oder mehrteilig ausgebildet ist und die Teile gleichzeitig in den Kühlkanal der Komponente bzw. des Grundkörpers eingesetzt werden. Die Mehrteiligkeit des Einsatzes ist insbesondere dann von Vorteil, wenn der Grundkörper bzw. die Komponente zwei einander gegenüberliegende Außenwände aufweist, die beide dem Heißgas der Gasturbine dauerhaft ausgesetzt werden sollen. Dies ist beispielsweise bei einer Turbinenschaufel der Fall, dessen Schaufelblatt stets eine saugseitige Außenwand und eine druckseitige Außenwand aufweisen. Üblicherweise befindet sich zwischen den beiden Schaufelblatt-Außenwänden zumindest ein Kühlkanal, welcher von Kühlluft durchströmt wird. Die Anordnung einer porösen mitgegossenen Struktur innerhalb eines derartigen Kühlkanals war bisher äußerst schwierig, da wegen der thermischen Dehnung, die das Schaufelblatt aufgrund der auf sie einwirkenden Temperaturen durchführt, mechanische Spannungen in der bisher mit beiden Schaufelblattwänden fest verbundenen porösen Struktur einbrachte, welche zu Rissen in der porösen Struktur führte. Aufgrund der Mehrteiligkeit des Einsatzes sind die beiden Teile relativ zueinander beweglich. In Verbindung mit der Tatsache, dass jedes Teil des Einsatzes mit nur einem der beiden Schaufelblatt-Außenwände befestigt ist, hat dies zur Folge, dass bei thermisch bedingten Dehnungen des Schaufelblatts die bisher zerstörerischen mechanischen Spannungen in der porösen Struktur des Einsatzes vermieden werden. Dies verlängert signifikant die Lebensdauer sowohl des Einsatzes als auch der mit diesem Einsatz ausgestatteten Komponente.

Selbstverständlich kann das vorgeschlagene Herstellungsverfahren lediglich Teil eines Herstellungsverfahrens sein. Beispielsweise ist es möglich, dass nach der Durchführung der vorgeschlagenen Verfahrensschritte die Komponente zur endgültigen Fertigstellung weiter bearbeitet wird, sei es mittels eines spandenden Verfahrens zum Herstellen von Filmkühlöffnungen in der Außenwand und/oder sei es das Beschichten der Außenwand mit einer Korrosionsschutz- und/oder Wärmedämmschicht.

Gemäß einer weiteren vorteilhaften Ausgestaltung der Komponente, bei der der Einsatz zumindest zwei Teile umfasst, sind die zumindest zwei Teile an ihrer gemeinsamen Kontaktfläche lose miteinander verzahnt. Die Verzahnung ermöglicht einerseits eine vergleichsweise genaue Positionierung der beiden Teile im Herstellungsverfahren während des Einsetzens in den Kanal und auch während der thermischen Homogenisierung bzw. weiteren thermischen Behandlung. Andererseits verhindert die Verzahnung, dass ein geringer Teil des durch den Einsatz strömenden Kühlmittels über eine vergleichsweise lange Strecke in einer Spalte, welche zwischen den beiden Teilen des Einsatzes existieren könnte, ungehindert hindurchströmt. Die Verzahnung ist dabei vorzugsweise derart ausgebildet, dass derjenige Teil eines Kühlmittels, welches im Spalt zwischen den Teilen strömen könnte oder kann, abschnittsweise auch die verzahnten Bereiche durchströmt. Damit wird verhindert, dass ein Teil des Kühlmittels über eine längere Strecke zwischen den beiden Teilen des Einsatzes strömt, ohne zum Abtransport der in der porösen Struktur eingeleiteten Wärme beizutragen.

Insgesamt wird mit der Erfindung eine Komponente mit einer einem Heißgas einer Gasturbine dauerhaft aussetzbaren Außenwand umfassend einen Grundkörper, einen zur Kühlung der Außenwand vorgesehenen Kanal und einen im Kanal angeordneten Einsatz sowie ein Verfahren zu dessen Herstellung vorgeschlagen. Dabei ist vorgesehen, dass der Einsatz und der Grundkörper separat voneinander hergestellt werden, wobei der Einsatz eine äußere Kontur aufweist, die der inneren Kontur des Kanals im Wesentlichen entspricht. Dadurch soll gewährleistet werden, dass der Einsatz über einen Großteil seiner Erstreckung zumindest an derjenigen Kanalwand zum Anliegen gelangen kann, welche ebenso einen Teil der Außenwand bildet. Um dabei eine besonders gute Anbindung einer porösen Struktur mit der Kanalwand zu erreichen, wird vorgeschlagen, dass die poröse Struktur, welche beispielsweise auch als metallischer Schaum ausgebildet sein kann, Teil des Einsatzes ist, welcher ferner eine nicht poröse Begrenzungswand aufweist. Die Begrenzungswand wird gleichzeitig mit der porösen Struktur hergestellt und ist kühlmittelseitig flächig mit der Außenwand verbunden. Um darüber hinaus eine besonders dauerhafte und besonders gut wärmeleitende Verbindung zwischen Einsatz bzw. Begrenzungswand und Kanalwand herzustellen, ist zwischen diesen eine metallische Folie oder Beschichtung vorgesehen.

Die weitere Erläuterung der Erfindung erfolgt anhand der in der Zeichnung dargestellten Ausführungsbeispiele. Im Einzelnen zeigen:
- FIG 1: den Querschnitt durch das Schaufelblatt einer Turbinenschaufel,
- FIG 2: den Querschnitt durch einen zweiteiligen Einsatz, welcher zum Einsetzen in einen Kühlkanal der Turbinenschaufel vorgesehen ist,
- FIG 3: den Längsschnitt durch den zweiteiligen Einsatz gemäß FIG 2 gemäß der Schnittlinie III - III,
- FIG 4: den Längsschnitt durch ein Führungsringsegment als erfindungsgemäße Komponente gemäß einer ersten Ausgestaltung und
- FIG 5: ein weiteres Führungsringsegment gemäß einer zweiten Ausgestaltung.

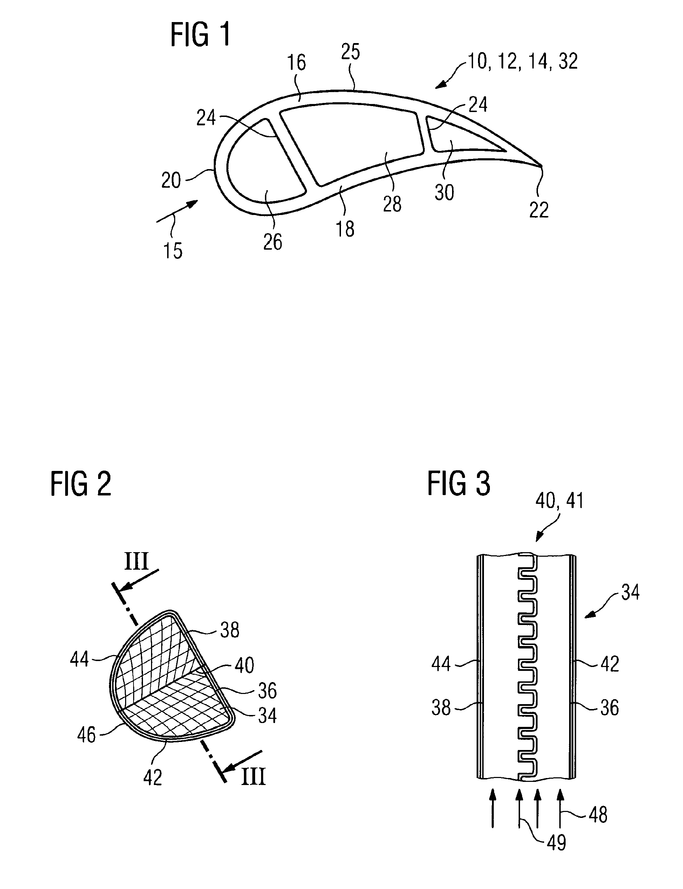

FIG 1 zeigt den Querschnitt durch ein Schaufelblatt 10 einer Turbinenschaufel 12. Die Turbinenschaufel 12 ist dabei eine Komponente 14, die beim Betrieb in einer Gasturbine von einem Heißgas 15 angeströmt und umströmbar ist. Bekanntermaßen weist das Schaufelblatt 10 der Turbinenschaufel 12 eine saugseitige Schaufelblattwand 16 sowie eine druckseitige Schaufelblattwand 18 auf. Die Schaufelblattwände 16, 18 erstrecken sich von einer gemeinsamen Vorderkante 20 zu einer gemeinsamen Hinterkante 22. Die Schaufelblattwände 16, 18 sind somit als dauerhaft dem Heißgas 15 der Gasturbine aussetzbaren Außenwände 25 ausgebildet. Das Schaufelblatt 10 weist drei durch Rippen 24 getrennte Kanäle 26, 28, 30 auf. Die Kanäle 26, 28, 30 dienen zur Führung von Kühlmittel, welches diese zur Kühlung der Schaufelblattwände 16, 18 längs - d.h. senkrecht zur Zeichnungsebene - durchströmt.

Die in FIG 1 lediglich schematisch dargestellte Turbinenschaufel 12 umfasst ein gegossenes Rohbauteil, welches im Wesentlichen von einem monolithischen Grundkörper 32 gebildet ist. Der Grundkörper 32 und somit auch die Turbinenschaufel 12 umfasst neben dem Schaufelblatt 10 auch noch nicht weiter dargestellte Elemente, wie beispielsweise eine den Heißgaspfad der Gasturbine begrenzende Plattform sowie einen Schaufelfuß zur Befestigung entweder an einem Rotor der Gasturbine, für den Fall, dass die Turbinenschaufel 12 als Laufschaufel ausgebildet ist, oder zur Befestigung an einen Leitschaufelträger, falls die Turbinenschaufel 12 als Leitschaufel ausgebildet ist.

Um eine durch Kühlmittel besonders effizient kühlbare Turbinenschaufel 12 anzugeben, ist vorgesehen, dass in den Kanälen 26, 28, 30 Einsätze angeordnet sind. Die Einsätze sind hauptsächlich - also in ihrem Inneren - als poröse metallische Strukturen ausgebildet und werden nach der Herstellung des Grundkörpers 32 in die Kanäle 26, 28, 30 eingesetzt. Exemplarisch zeigt dazu FIG 2 einen Einsatz 34. Der Einsatz 34 weist insgesamt eine Querschnittskontur auf, die der Querschnittskontur des Kanals 26 entspricht. Der Einsatz 34 ist dazu vorgesehen, passgenau in den Kanal 26 des Schaufelblatts 10 eingesetzt zu werden. Für die Kanäle 28, 30 sind ebenso Einsätze vorgesehen, deren Konturen den Konturen der Kanäle 28, 30 jeweils entsprechen.

Die offen poröse metallische Struktur des Einsatzes 34 ist in FIG 2 durch die gekreuzten Netzlinien lediglich schematisch dargestellt. Der Einsatz 34 nach FIG 2 ist aus zwei Teilen 36, 38 gebildet. Die beiden Teile 36, 38 liegen in einem Kontaktbereich 40 aneinander und sind dabei relativ zueinander beweglich. Die porösen Strukturen der Teile 36, 38 weisen an ihren Seiten, die an den Wänden des Kanals 26 zum Anliegen kommen sollen, eine flächige nicht poröse Begrenzungswand 42, 44 auf. Die Begrenzungswand 42, 44 beider Teile 36, 38 bilden gemeinschaftlich eine metallische Ummantelung des ansonsten porösen metallischen Einsatzes 34. Die poröse Struktur des Teils 36 mit der daran angeordneten Begrenzungswand 42 und die poröse Struktur des Teils 38 mit der daran angeordneten Begrenzungswand 44 sind jeweils monolithisch und in einem separaten Verfahren hergestellt worden. Beide Teile 36, 38 sind im Kontaktbereich 40 miteinander verzahnt. Die Verzahnung 41 ist in FIG 3 dargestellt, welche den Schnitt III-III aus FIG 2 durch den Einsatz 34 zeigt.

Einer der Herstellungsschritte zur Herstellung der Turbinenschaufel 12 umfasst das Zusammensetzen des Grundkörpers 32 und des Einsatzes 34. Hierzu ist vorgesehen, dass einerseits der Grundkörper 32 aufgeheizt und/oder der Einsatz 34 abgekühlt wird. Durch die thermisch bedingte Dehnung vergrößert sich die Querschnittsfläche des Kanals 26 einerseits. Andererseits verkleinert sich die Querschnittsfläche des Einsatzes 34 aufgrund der thermisch bedingten Kontraktion. Hierdurch kann der Einsatz 34 vergleichsweise einfach in den Grundkörper 32 montiert werden. Um einen besonders innigen Kontakt zwischen den den Kanal 26 umgebenden Wänden und der Begrenzungswand 42, 44 herzustellen ist es von Vorteil, wenn der Einsatz 34 von einer dünnen Folie 46 umgeben ist. Der Einsatz 34 wird dann samt Folie 46 in den Kanal 26 eingesetzt.

Durch das Abkühlen des Grundkörpers 32 auf Raumtemperatur wird sich die Querschnittsfläche des Kanals 26 geringfügig verkleinern. Das Erwärmen des Einsatzes 34 auf Raumtemperatur wird dessen Querschnittsfläche vergrößern, so dass nach Abschluss dieser Homogenisierung ein inniger und flächiger Sitz des Einsatzes 34 im Kanal 26 gewährleistet ist. Je nach Aufheiztemperatur des Grundkörpers 32 ist es dabei sogar möglich, dass die Folie 46 eine stoffschlüssige Verbindung zwischen dem Material des Grundkörpers 32 und dem metallischen Material des Einsatzes 34 aktiv herbeiführt. In diesem Fall wäre die Folie 46 in eine Bondschicht umgewandelt worden. Selbstverständlich ist es auch möglich, dass eine stoffschlüssige Verbindung durch einen separaten Heizvorgang her-beigeführt wird, wobei beide Elemente, Grundkörper 32 und Einsatz 34, aufgeheizt werden.

Der Kontaktbereich 40 der beiden Teile 36, 38 des Einsatzes 34 ist dabei so im Schaufelblatt 10 der Turbinenschaufel 12 orientiert, dass eine seiner Erstreckungen mit der Profilmittenlinie des Schaufelblatts 10 nahezu zusammenfällt, welche sich mittig zwischen der saugseitigen Schaufelblattwand 16 und der druckseitigen Schaufelblattwand 18 von der Vorderkante 20 zur Hinterkante 22 erstreckt. Nachdem das Teil 36 mit der druckseitigen Schaufelblattwand 18 und das Teil 38 mit der saugseitigen Schaufelblattwand 16 fest verbunden worden sind, können diese sich bei betriebsbedingter Erwärmung des Schaufelblatts 10 relativ zueinander bewegen. Durch die relative Beweglichkeit der beiden Teile 36, 38 zueinander wird vermieden, dass mechanische Belastungen im Gefüge der porösen Struktur des Einsatzes 34 entstehen, welche zu einem Bruch eines Einsatzes 34 führen würden, wäre dieser einteilig ausgebildet und mit beiden Schaufelblattwänden 16, 18 fest verbunden.

In der einsatzbereiten Turbinenschaufel 12 kann die poröse Struktur des Einsatzes 34 von Kühlmittel, beispielsweise Kühlluft, durchströmt werden. Die Kühlluft ist in FIG 3 durch die vier nebeneinander dargestellten Pfeile 48 angedeutet. Um zu verhindern, dass ein geringer Teil 49 der Kühlluft 48 über eine längere axiale Erstreckung des Kanals 26 bzw. des Einsatzes 34 strömt, ohne dass dieser Anteil 49 der Kühlluft 48 die porösen Strukturen durchströmt, ist ein verzahnter Bereich 41 vorgesehen.

Dadurch wird gewährleistet, dass der Anteil 49 an Kühlluft 48 zumindest auch abschnittsweise poröse Strukturen des Teils 38 durchströmt.

Der aus den Figuren 2 und 3 bekannte Einsatz 34 kann unter Anpassung seiner äußeren Kontur in gleichartiger Weise in den Kanälen 28, 30 eingesetzt und befestigt werden.

Da es sich als Nachteil herausgestellt hat, wenn die Rippen 24 des Schaufelblatts 10 auch gekühlt werden, bietet es sich an, die Begrenzungswand 42, 44 und die Folie 46 nur an denjenigen Seiten des Einsatzes 34 anzuordnen, die später an denjenigen Wänden der Kanäle 26, 28, 30 zum Anliegen kommen (Außenwänden 25), die an ihren der Begrenzungswand 42, 44 gegenüberliegenden Seiten von Heißgas 15 umströmt werden.

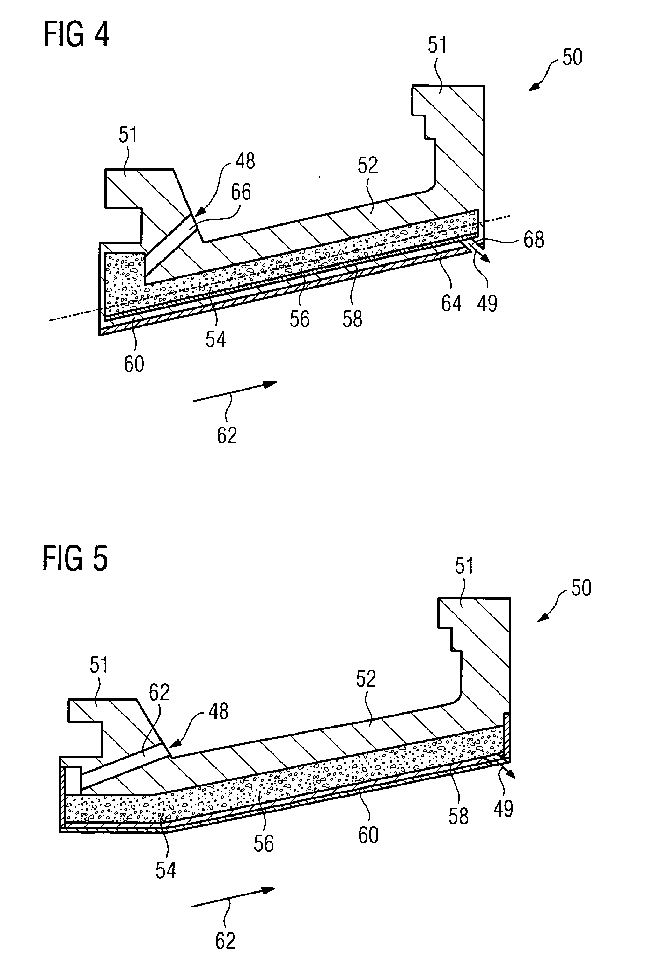

Die Komponente 14 kann selbstverständlich auch als Führungsringsegment 50 - wie in FIG 4 und 5 gezeigt - ausgebildet sein, welche denjenigen Bereich des Heißgaspfades begrenzt, innerhalb dessen Laufschaufeln sich bewegen. Das Führungsringsegment 50 weist einen Grundkörper 52 auf, der mit einem Kanal 54 versehen ist. Im Kanal 54 ist ein Einsatz 56 mit einer Begrenzungswand 58 vorgesehen. Das Führungsringsegment 50 kann über Haken 51 an einer übergeordneten Trägerstruktur, beispielsweise an einem Leitschaufelträger befestigt werden. Die Außenwand 60 des Führungsringsegments 50 ist dem Heißgas 62 der Gasturbine dauerhaft aussetzbar, wobei zur weiteren Verbesserung der Wärmebeständigkeit des Führungsringsegments 50 die Außenwand 60 mit einer keramischen Schutzschicht 64 versehen ist. Die Zuführung von Kühlluft 48 erfolgt über eine Zuführung 66. Nachdem die Kühlluft 48 den Einsatz 56 durchströmt hat und dabei die im porösen Material enthaltene Wärmeenergie durch eine vielfach wiederholte Kombination von konvektiver Kühlung und Prallkühlung besonders effizient aufgenommen hat, kann die aufgeheizte Kühlluft 49 durch einen Auslass 68 das Führungsringsegment 50 verlassen und dabei in den Heißgaspfad einströmen, wo es sich mit dem Heißgas 62 vermischt. Der Grundkörper 52 und der Kühlkanal 54 ist durch ein Gussverfahren hergestellt, so dass die Außenwand 60 monolithisch mit dem Grundkörper 52 verbunden ist.

Selbstverständlich ist es auch möglich, dass die Außenwand 60 nachträglich an einen gegossenen Grundkörper 52 angefügt wird. Dies ist in FIG 5 dargestellt, wobei hier identische Merkmale mit identischen Bezugszeichen versehen sind.

Auch ist hier eine besonders innige Verbindung von Einsatz 56 und Grundkörper 52 lediglich heißgasseitig gewünscht, warum die nicht poröse Begrenzungswand 58 nur an derjenigen Seite des Einsatzes 56, d. h. der porösen Struktur vorgesehen ist, welche mit der dem Heißgas 62 abgewandten Seite der Außenwand 60 - ggf. mit Hilfe einer Bondschicht - verbunden ist. Um die Wärmeleitung aus dem Einsatz 56 in den Grundkörper 52 und dessen Haken 51 zu vermeiden, weist der Einsatz 56 an seiner den Haken 51 zugewandten Seite daher keine Begrenzungswand 58 auf.

Die in den Figuren 4 und 5 gezeigten Führungsringsegmente 50 können ohne größere konstruktive Änderungen auch als Wandelemente einer Brennkammer angewendet werden.

Die in den Figuren dargestellten Ausführungsbeispiele sollen dabei nicht limitierend zu verstehen sein, sondern beschreiben den grundlegenden Gedanken der Erfindung nur beispielhaft.

## Patentansprüche

1. Verfahren zum Herstellen einer Komponente (14) mit einer einem Heißgas (15, 62) einer Gasturbine aussetzbaren Außenwand (25, 60), wobei die Komponente zumindest einen Grundkörper (32, 52), einen zur Kühlung der Außenwand (25, 60) vorgesehen Kanal (26, 28, 30, 54) und einen darin sitzenden Einsatz (34, 56) umfasst,
umfassend die aufeinanderfolgenden Schritte:
a) Herstellen eines Grundkörpers (32, 52), in welchem oder an welchem der Kanal (26, 28, 30, 54) vorgesehen ist und Herstellen eines Einsatzes (34, 56) zum Einsetzen in den Kanal (26, 28, 30, 54), wobei dessen äußere Kontur der inneren Kontur des Kanals (26, 28, 30, 54) im Wesentlichen entspricht,
b) Aufheizen des Grundkörpers (32, 52) und/oder Abkühlen des Einsatzes (34, 56) und
c) Einsetzen des Einsatzes (34, 56) in den Kanal (26, 28, 30, 54).

2. Verfahren nach Anspruch 1,
bei dem vor dem Einsetzen des Einsatzes (34, 56) in den Kanal (26, 28, 30, 54) an denjenigen Oberflächen des Einsatzes (34, 56), welche nach dem Einsetzen an einer Wand des Kanals (26, 28, 30, 54) zum Anliegen gelangen, zumindest bereichsweise eine metallische Folie (46) angelegt oder eine Beschichtung aufgebracht wird.

3. Verfahren nach Anspruch 1 oder 2,
bei dem im Anschluss an Schritt c) die Komponente (14) sich thermisch homogenisiert und/oder eine weitere thermische Behandlung erfährt.

4. Verfahren nach einem der Ansprüche 1 bis 3,
bei dem der Einsatz (34, 56) eine poröse metallische Struktur mit einer zumindest teilweise nicht porösen Begrenzungswand (42, 44, 58) umfasst.

5. Verfahren nach einem der Ansprüche 1 bis 4,
bei dem der Einsatz (34, 56) mehrteilig ausgebildet ist und die Teile (36, 38) gleichzeitig eingesetzt werden.

6. Verfahren nach einem der Ansprüche 1 bis 5,
bei dem die Komponente (14) zur endgültigen Herstellung weiter bearbeitet wird.

7. Komponente (14) mit einer einem Heißgas (15, 62) einer Gasturbine aussetzbaren Außenwand (25, 60),
umfassend einen Grundkörper (32, 52), einen zur Kühlung der Außenwand (25, 60) vorgesehenen Kanal (26, 28, 30, 54) und einen im Kanal (26, 28, 30, 54) angeordneten Einsatz (34, 56),
**dadurch gekennzeichnet,**
**dass** der Einsatz (34, 56) eine poröse metallische Struktur umfasst, die an zumindest einer Seite eine nicht poröse Begrenzungswand (42, 44, 58) aufweist, welche zumindest teilweise flächig mit der Kanalwand in wärmeleitenden Kontakt ist.

8. Komponente (14) nach Anspruch 7,
bei der zur Kontaktierung zwischen der Begrenzungswand (42, 44, 58) und der Kanalwand eine Bondschicht vorgesehen ist.

9. Komponente (14) nach Anspruch 8,
bei der die Bondschicht als metallische Schicht ausgebildet ist.

10. Komponente 14 nach einem der Ansprüche 7, 8 oder 9, bei der die Begrenzungswand (42, 44) - im Querschnitt des Einsatzes (34) betrachtet - als Ummantelung der porösen metallischen Struktur ausgebildet ist.

11. Komponente (14) nach einem der Ansprüche 7 bis 10, bei der der Einsatz (34, 56) zwei- oder mehrteilig ausgebildet ist.

12. Komponente (14) nach Anspruch 11,
bei der die Teile (36, 38) des Einsatzes (34) relativ zueinander beweglich sind.

13. Komponente (14) nach Anspruch 11 oder 12,
bei der die Teile (36, 38) des Einsatzes (34) spielbehaftet miteinander verzahnt sind.

14. Komponente (14) nach Anspruch 13,
bei der die Verzahnung (41) derart ausgebildet ist, dass derjenige Teil (49) eines Kühlmittel (48), welcher im Spalt zwischen den Teilen (36, 38) strömt, abschnittsweise auch die verzahnten Bereiche durchströmt.

15. Komponente (14) nach einem der Ansprüche 7 bis 14, welche als Turbinenschaufel (12), als Führungsringsegment (50) oder als ein Wandelement einer Gasturbinen-Brennkammer ausgebildet ist.
